# FASCICULE DE BREVET EUROPEEN

(11) **EP 3 839 396 B1**
(45) Date de publication et mention de la délivrance du brevet: **30.10.2024**
(21) Numéro de dépôt: 20212075.4
(22) Date de dépôt: 07.12.2020
(51) Int. Cl.: F28D 1/02, F28D 15/02, F28F 1/22, F28D 15/00

(54) **DISPOSITIF DE REFROIDISSEMENT À AILETTE ET INSERT**
GERIPPTE KÜHLUNGSVORRICHTUNG MIT INSERIERTEM ELEMENT
COOLING DEVICE WITH FIN AND INSERT

(30) Priorité: 20.12.2019 FR 1915037
(43) Date de publication de la demande: 23.06.2021
(73) Titulaire: Safran Electrical & Power, 31700 Blagnac (FR)
(72) Inventeur: LATEB, Ramdane, 78400 CHATOU (FR); MAGNO, Jose-Carlos, 78400 CHATOU (FR)
(74) Mandataire: Atout PI Laplace

(56) Documents cités:
- EP-A1- 2 770 253
- FR-A1- 2 861 913
- US-A1- 2003 089 486
- US-A1- 2008 062 651

## Description

L'invention concerne le refroidissement d'un élément produisant de la chaleur. L'invention trouve une application dans le domaine des machines électriques et de l'électronique de puissance. En effet, il est connu que les éléments électriques ainsi que l'électronique de puissance engendrent des pertes qui se traduisent par une production de chaleur qu'il est nécessaire d'évacuer. L'évacuation de cette chaleur, garantissant un bon fonctionnement des éléments cités précédemment, devient donc une priorité. L'invention trouve une application particulière dans le domaine de l'aéronautique où la tendance est d'augmenter le nombre d'équipements électriques et donc la puissance électrique embarquée. En particulier, l'invention se rapporte à un dispositif de refroidissement conforme au préambule de la revendication 1, tel que divulgué par US 2003/089486A1.

Comme dit précédemment, les machines électriques peuvent générer beaucoup de chaleur. En outre, le refroidissement nécessaire à l'évacuation de cette chaleur est limité par certaines contraintes. L'encombrement ainsi que la masse ajoutée par un éventuel dispositif de refroidissement sont notamment limités par les spécificités d'un véhicule embarquant une machine électrique. Par exemple, pour des aéronefs à décollage et atterrissage verticaux, électriques ou hybrides, il est souhaitable d'obtenir un dispositif capable de refroidir les éléments électriques doté d'une faible masse et compact.

Il existe de nombreux dispositifs permettant de refroidir les machines électriques. Deux approches se distinguent aujourd'hui :
- La première approche permettant de résoudre ce problème de refroidissement des éléments électriques s'appuie sur l'utilisation d'un flux d'air capable d'évacuer la chaleur par convection. Le dispositif de refroidissement, selon cette première approche, prend la forme d'un radiateur doté d'ailettes capable d'échanger de la chaleur avec la machine électrique. Le flux d'air, balayant la machine électrique, échange alors thermiquement avec ces ailettes, qui reçoivent la chaleur provenant de la machine électrique. Cependant, cette solution est limitée par la quantité maximale de chaleur que peut évacuer ce dispositif. Ainsi, pour augmenter les capacités de refroidissement de ce type de dispositif, il est nécessaire d'augmenter l'encombrement du dispositif, ce qui ne semble pas optimal.
- Une autre approche s'oriente davantage vers l'utilisation d'un fluide réfrigérant circulant dans des canaux de la machine électrique. Le fluide absorbe la chaleur générée par la machine électrique. A l'extérieur de la machine électrique, le fluide circule dans un échangeur permettant de refroidir le fluide. Le fluide caloporteur est choisi pour posséder une capacité calorifique importante. Le refroidissement de la machine électrique s'en trouve amélioré. Cependant, l'encombrement ajouté autour de la machine électrique par l'intermédiaire des échangeurs, de la pompe de circulation et du fluide rend cette approche plus compliquée et moins enviable pour un homme du métier souhaitant alléger son véhicule.

Par conséquent, le refroidissement d'une machine électrique est aujourd'hui limité par des contraintes de masse et d'encombrement que l'état de l'art n'est pas capable de surmonter.

Il est donc nécessaire d'obtenir un moyen de refroidissement efficient de masse et d'encombrement réduit.

Pour ce faire, l'invention propose de reprendre la première approche en en améliorant l'efficacité. A cet effet, l'invention propose de combiner des ailettes de refroidissement et des caloducs.

Plus précisément, l'invention a pour objet un dispositif de refroidissement selon la revendication 1.

Selon un aspect de l'invention, l'insert est un caloduc.

Selon un aspect de l'invention, les n ailettes de refroidissement comprenant au moins un insert chacune s'étendent selon des mêmes abscisses suivant la première direction et une ordonnée différente suivant un axe de la section, les inserts ayant une abscisse décalée d'une longueur supérieure ou égale à la dimension caractéristique de la section des inserts selon la première direction.

Selon un aspect de l'invention, l'insert est noyé dans l'ailette de refroidissement l'accueillant.

Selon un aspect de l'invention, la plus grande longueur de l'insert est égale ou supérieure à une plus grande longueur l'ailette de refroidissement dans une section de l'ailette de refroidissement perpendiculaire à la première direction.

Selon un aspect de l'invention, l'ailette de refroidissement est pourvue d'une section réduite en extrémité.

Selon un aspect de l'invention, plusieurs des n ailettes de refroidissement sont alignées suivant la première direction.

Selon un aspect de l'invention, le dispositif de refroidissement comprend :
- une première ailette de refroidissement s'étendant selon une abscisse suivant la première direction et une ordonnée suivant un axe de la section,
- une deuxième ailette de refroidissement s'étendant selon l'abscisse suivant la première direction et une ordonnée différente de la première ailette de refroidissement suivant l'axe de la section,
- une des n, n étant un entier supérieur ou égal à trois, ailettes de refroidissement comprenant au moins un insert disposé dans l'ailette de refroidissement et s'étendant selon la deuxième direction, l'ailette de refroidissement ayant une ordonnée comprise entre les ordonnées de la première et de la deuxième ailette de refroidissement suivant l'axe de la section.

Selon un aspect de l'invention, une graisse thermique est appliquée entre l'insert et l'ailette de refroidissement correspondante.

Selon un aspect de l'invention, la machine électrique comprend une carcasse sur laquelle s'appuient des enroulements et équipée du dispositif de refroidissement.

L'invention sera mieux comprise et d'autres avantages apparaîtront à la lecture de la description détaillée d'un mode de réalisation donné à titre d'exemple, description illustrée par le dessin joint dans lequel :

La figure 1 représente une machine électrique dotée d'un dispositif de refroidissement non conforme à l'invention.

Les figures 2a et 2b représentent une vue focalisée autour de deux ailettes de refroidissement d'un dispositif de refroidissement non conforme à l'invention.

La figure 3a représente un deuxième mode de réalisation d'un dispositif de refroidissement non conforme à l'invention.

La figure 3b représente une vue focalisée d'une enceinte d'accueil selon le deuxième mode de réalisation d'un dispositif de refroidissement non conforme à l'invention.

La figure 3c représente une vue schématique d'une variante du deuxième mode de réalisation d'un dispositif de refroidissement non conforme à l'invention.

Les figures 4a et 4b représentent un troisième mode de réalisation d'un dispositif de refroidissement conforme à l'invention.

Par souci de clarté, les mêmes éléments porteront les mêmes repères dans les différentes figures.

Dans la présente description, une direction D1 est définie par la direction d'un flux d'air 12 dirigé par une hélice ou une roue de ventilation dédiée.

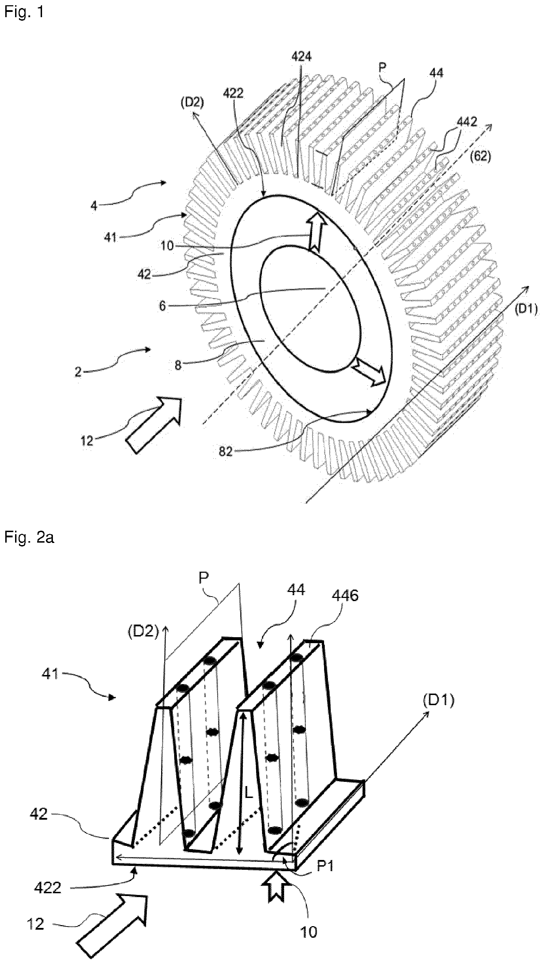

la figure 1 représente une machine électrique 2 dotée d'un dispositif de refroidissement 4. Il est possible de mettre en oeuvre l'invention avec toute autre type de source de chaleur, avec ou sans partie tournante, que cette source de chaleur soit électrique ou mécanique. Généralement, une machine électrique 2 capable de générer de la puissance est composée d'une partie mobile ou rotor 6 tournant autour d'un axe 62 et d'une partie fixe ou stator 8. Lors de ces phases de production de puissance électrique en mode générateur, ou mécanique en mode moteur, des pertes 10 sont engendrées sous forme de chaleur qu'il est nécessaire d'évacuer.

Le dispositif de refroidissement 4, destiné à évacuer cette chaleur, est formé d'un radiateur 41 tubulaire, réalisé par exemple dans un alliage d'aluminium. Le radiateur 41 comprend des ailettes de refroidissement 44 sensiblement planes. Chaque ailette de refroidissement 44 s'étend principalement dans un plan P contenant la direction D1. Chaque ailette de refroidissement 44 s'étend également selon une direction radiale D2 par rapport à l'axe de rotation 62 du rotor 6. Dans l'exemple représenté, la direction D2 est perpendiculaire à la direction D1. Autrement dit, le plan P est défini par D1 et D2. Il existe donc un plan P par ailette de refroidissement 44, puisque chaque direction D2 étant propre à son ailette de refroidissement 44. Les ailettes de refroidissement 44 prennent la forme de fines lamelles rectangulaires ou trapézoïdales longées dans leur longueur par un flux d'air 12 selon la direction D1.

Le radiateur 41 comprend un socle 42 tubulaire d'où émergent les ailettes de refroidissement 44. La surface extérieure du socle 42 et des ailettes de refroidissement 44 forme une surface d'échange thermique 424 entre le radiateur 41 et le flux d'air 12. Une surface interne 422 du socle 42 du radiateur 41 est en contact avec une paroi extérieure 82 du stator 8. Le dispositif de refroidissement 4 enveloppe la machine électrique 2 en étant solidaire de la paroi extérieure 82 du stator 8.

De cette manière, l'évacuation de la chaleur 10 générée par la machine électrique 2 s'effectue en direction de l'extérieur, c'est-à-dire, de façon radiale par rapport à l'axe de rotation 62 du rotor 6. La chaleur 10, s'évacue selon la direction D2, tout d'abord par conduction au niveau du contact entre paroi extérieure 82 du stator 8 et la surface interne 422 du socle 42, puis, toujours par conduction à l'intérieur du radiateur 41 depuis son socle 42 jusqu'à ses ailettes de refroidissement 44 et enfin par convection entre le radiateur 41 et le flux d'air 12 au niveau de la surface d'échange thermique 424.

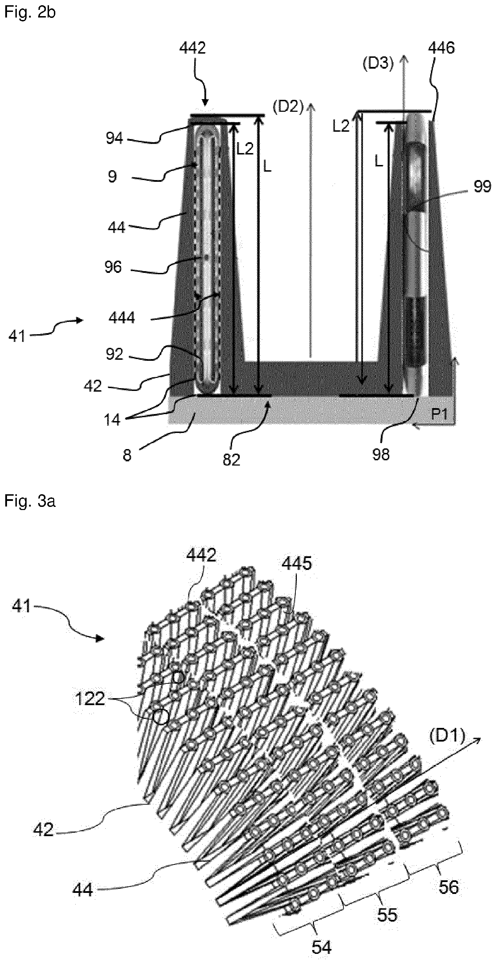

Dans la présente invention, chaque ailette de refroidissement 44 comprend au moins un caloduc 9 s'étendant principalement selon une troisième direction D3 du plan P distincte de la direction D1. Dans l'exemple représenté, la troisième direction D3 est confondue avec la direction D2. Il est également possible de disposer des caloducs 9 s'étendant selon une troisième direction D3 inclinée par rapport à la direction D2, la troisième direction D3 de chaque caloduc 9 restant distincte de la direction D1. Pour disposer chaque caloduc 9, l'ailette de refroidissement 44 considérée comporte dans sa longueur L définie suivant la direction D2, une ou plusieurs enceintes d'accueil 442 dans chacune desquelles est inséré un caloduc 9 représentés plus précisément dans les figures 2a et 2b. Dans l'exemple représenté, chaque ailette de refroidissement 44 comprend plusieurs enceintes d'accueil 442 alignées suivant la direction D1 du flux d'air 12. Les caloducs 9 peuvent prendre toute forme de barreau.

Un caloduc est une enceinte hermétique renfermant un fluide à l'état d'équilibre. Le caloduc est un conducteur thermique qui permet de guider la chaleur entre ses deux extrémités par l'intermédiaire de changements d'état du fluide à l'intérieur du caloduc. Plus précisément, En effet, la vaporisation du fluide à l'état liquide, à l'intérieur du caloduc, permet l'absorption d'énergie thermique émise par une source de chaleur qui est transférée suite à la circulation de cette même vapeur au sein du caloduc jusqu'à une zone de dissipation où le fluide retrouve son état initial par condensation. Les caloducs 9 peuvent être des caloducs disponibles sur le marché.

De façon plus générale, le caloduc 9 forme un insert dont la résistance thermique est plus faible que celle du radiateur 41. Dans le cadre de l'invention, il est possible de remplacer le caloduc par un barreau réalisé dans un matériau dont la conductivité thermique est supérieure à celle du matériau dans lequel le radiateur 41 est réalisé. A titre d'exemple, l'insert peut être formé par un barreau de cuivre inséré dans un radiateur en alliage d'aluminium. Avantageusement, il peut être envisagé de placer des inserts dont la masse volumique est inférieure à celle des ailettes de refroidissement 44 afin d'alléger le dispositif de refroidissement 4. Par exemple, l'utilisation d'insert en alliage d'aluminium dans un radiateur en acier favoriserait les échanges thermiques et réduirait significativement la masse du dispositif de refroidissement 4.

Les figures 2a et 2b représentent une vue focalisée autour de deux ailettes de refroidissement 44 du dispositif de refroidissement 4. Sur la figure 2a les deux ailettes de refroidissement 44 comprennent chacune deux caloducs 9. Sur la figure 2b les deux ailettes de refroidissement 44 sont représentées en coupe par un plan P1 défini comme un plan traversant les caloducs 9 perpendiculairement à la direction D1.

Les ailettes de refroidissement 44 et le socle 42 forment le radiateur 41, avantageusement monobloc. Le radiateur 41 peut être obtenu de différentes façons comme par exemple le moulage ou l'enlèvement de matière.

Les caloducs 9 comportent essentiellement une zone d'évaporation 92 en une première extrémité, destinée à être disposée à proximité de la zone de chaleur, c'est-à-dire au plus près de la paroi extérieure 82 du stator 8, une zone de condensation 94 au niveau de la seconde extrémité, destinée à faciliter l'échange thermique avec le flux d'air 12 et une zone de transition 96 entre la zone d'évaporation 92 et la zone de condensation 94. Dans l'exemple représenté, les caloducs 9 ont une forme cylindrique autour de leur troisième direction D3. Les caloducs 9 possèdent une longueur L2 définie selon la troisième direction D3. La longueur L2 représente la plus grande longueur du caloduc 9 considéré.

Comme énoncé précédemment, les caloducs 9 peuvent prendre toute forme de barreau ou de tube. L'enceinte d'accueil 442, qui comprend des bords latéraux 444 représenté en figure 2b, est en contact direct avec le caloduc 9 l'accueillant. Ainsi, afin de maximiser le contact entre le caloduc 9 et l'enceinte d'accueil 442 par l'intermédiaire des bords latéraux 444, les bords latéraux 444 prennent une forme similaire à la forme des caloducs 9. Ainsi, pour des caloducs 9 ayant une forme cylindrique, les bords latéraux 444 prennent une forme circulaire donnant à l'enceinte d'accueil 442 la forme d'un cylindre creux apte à accueillir le caloduc de forme cylindrique. Pour le cas d'un caloduc 9 de forme parallélépipédique, l'enceinte d'accueil 442 s'y rapportant prend la forme adéquate permettant l'accueil de ce caloduc 9 parallélépipédique tout en maximisant le contact direct. Ainsi, chaque caloduc 9 est inséré dans l'enceinte d'accueil 442 s'y rapportant.

Sur la partie gauche de la figure 2b, le caloduc 9 possède une longueur L2 inférieure à la longueur L de l'ailette de refroidissement 44 correspondante. Autrement dit, le caloduc 9 est noyé dans l'ailette de refroidissement 44. Cela permet d'éviter les potentiels contacts entre le caloduc 9 et des éléments extérieurs portés par le flux d'air 12 qui pourraient détériorer, voire même détruire, la zone de condensation 94. L'ailette de refroidissement 44 devient alors une carapace protectrice du caloduc 9 inséré dans l'ailette de refroidissement 44 correspondante.

Alternativement, comme représenté sur la partie droite de la figure 2b, le caloduc 9 peut avoir une longueur L2 égale ou supérieure à la longueur L de l'ailette de refroidissement 44 correspondante. Autrement dit, la zone de condensation 94 des caloducs 9 dépasse l'extrémité supérieure 446 de l'ailette de refroidissement 44 correspondante. La zone de condensation 94 est alors en contact immédiat avec le flux d'air 12, ce qui améliore l'échange thermique avec le flux d'air 12.

Néanmoins, les caloducs 9 dont la forme est tubulaire, présentant une longueur L2 supérieure à la longueur L de l'ailette de refroidissement 44 correspondante et s'étendant selon la troisième direction D3, sont et restent noyés dans l'ailette de refroidissement 44 correspondante sur une plus grande part de leur longueur L2 selon la troisième direction D3 de chaque caloduc 9. Plus précisément, la longueur L de l'ailette de refroidissement 44 est au moins égale à la moitié de la longueur L2 du caloduc 9 accueilli. De cette manière, la structure rigide des ailettes de refroidissement 44 assure une protection des caloducs 9, qui sont des échangeurs fragiles.

En outre, afin d'éviter que de l'air soit emprisonné entre les caloducs 9, les enceintes d'accueil 442 des ailettes de refroidissement 44 et la paroi extérieure 82 du stator 8, qui peut être un frein aux échanges thermiques, une graisse thermique 14 est appliquée autour des zones de contact, c'est-à-dire autour du point de contact 98 entre les caloducs 9 et la paroi extérieure 82 du stator 8 et sur des bords latéraux 444 des enceintes d'accueil 442, bord en contact direct avec les parois latérales 99 des caloducs 9. La graisse thermique 14 permet aussi de limiter l'effet de corrosion galvanique entre les caloducs 9, les enceintes d'accueils 442 des ailettes de refroidissement 44 et la paroi extérieure 82 du stator 8.

En effet, les caloducs 9, le radiateur 41 et le stator 8 n'étant pas obligatoirement obtenus à partir du même matériau, il est possible qu'un phénomène de corrosion se manifeste, ce qui nuirait au bon fonctionnement du dispositif de refroidissement 4. La présence de la graisse thermique 14 permet ainsi de libérer le choix des matériaux en contact, notamment pour le caloduc 9 et l'ailette de refroidissement 44 qui l'accueille.

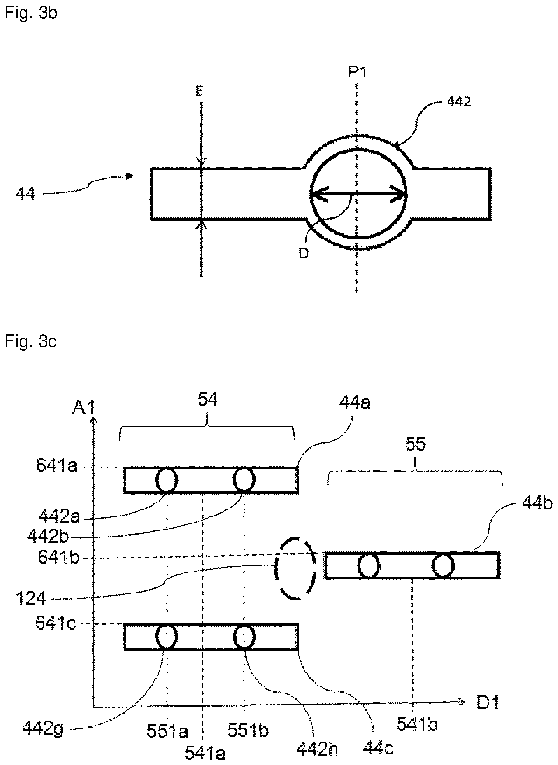

La figure 3a représente un deuxième mode de réalisation du dispositif de refroidissement 4 dans lequel plusieurs ailettes de refroidissement 44 sont alignées sur le socle 42 du radiateur 41 selon la direction D1 du flux d'air 12. Le deuxième mode de réalisation permet d'augmenter la zone d'échange thermique entre le radiateur 41 et le flux d'air 12. Ce deuxième mode est décrit plus précisément en figure 3b.
La figure 3b est une vue focalisée sur l'enceinte d'accueil 442, selon le deuxième mode de réalisation, destinée à accueillir un caloduc 9. Sur la figure 3b, une dimension caractéristique de la section du caloduc 9, c'est-à-dire un diamètre D du caloduc 9, dans le cas de caloducs de forme tubulaire, est supérieur à une épaisseur E de l'ailette de refroidissement 44 correspondante définie hors de la section P1 de l'ailette de refroidissement. Ainsi, les enceintes d'accueil 442 forment une excroissance 445 des ailettes de refroidissement 44 selon une direction sensiblement perpendiculaire à la direction D1 du flux d'air 12. Cette excroissance 445 permet de modifier localement le flux d'air 12 et de générer ainsi des turbulences locales 122 autour des excroissances 445 qui augmentent significativement les échanges thermiques entre les ailettes de refroidissement 44 et le flux d'air 12 les longeant. Alternativement, comme représenté sur la figure 1, le diamètre D des caloducs est inférieur à toute épaisseur des ailettes de refroidissement 44. Cela permet d'éviter toute perte de charge dans la circulation du flux le long de l'ailette de refroidissement 44.

En outre, chaque enceinte d'accueil 442 d'une ailette de refroidissement 44 est espacée d'une autre enceinte d'accueil 442 adjacente sur cette même ailette de refroidissement 44 suivant une longueur au moins égale à la dimension caractéristique de la section du tube du caloduc 9, à savoir le diamètre. Préférentiellement, chaque enceinte d'accueil 442 d'une ailette de refroidissement 44 est espacée d'une autre enceinte d'accueil 442 adjacente sur cette même ailette de refroidissement 44 suivant une longueur supérieure à la dimension caractéristique de la section du tube du caloduc 9. Ainsi chaque caloduc 9 est distant selon la première direction D1 d'un autre caloduc 9 suivant une longueur égale ou supérieure à la dimension caractéristique de la section du tube du caloduc 9. Cette disposition espacée des caloducs 9 dans les ailettes de refroidissement 44 permet d'augmenter les échanges thermiques entre les ailettes de refroidissement 44 et le flux d'air 12 (représenté en figure 1) la balayant tout en garantissant une bonne rigidité de la structure porteuse, à savoir l'ailette de refroidissement 44. En effet, les caloducs étant des échangeurs fragiles, l'insertion d'un grand nombre de caloducs 9 dans les ailettes de refroidissement 44 peut nuire à la bonne rigidité de ces dernières et rendre fragiles, voire sujets à d'éventuelles casses les ailettes de refroidissement 44. En outre, cette disposition espacée permet aussi de limiter le nombre de caloducs 9 insérés dans les ailettes de refroidissement 44, limitant ainsi le coût lié à l'utilisation de ces échangeurs thermiques.

Un autre avantage à cette disposition espacée des caloducs 9 dans les ailettes de refroidissement 44 est l'adaptabilité du dispositif de refroidissement à accueillir une pluralité de différents caloducs d'ors et déjà disponibles dans le commerce et à ne pas être dans l'obligation d'adapter un nouveau type de caloduc spécifique aux ailettes de refroidissement 44.

En outre, il peut aussi être envisagé de modifier directement des radiateurs tubulaires présentant des ailettes utilisés dans le commerce et d'y introduire directement des caloducs 9 en perçant les ailettes, par exemple, afin d'obtenir les enceintes d'accueil 442. De cette manière, il est possible de limiter le coût de production du dispositif de refroidissement 4 en « recyclant » d'autres radiateurs tubulaires destinés à refroidir les mêmes composants.

La figure 3c représente une variante de ce deuxième mode de réalisation du dispositif de refroidissement 4 dans laquelle les ailettes de refroidissement 44 sont placées en quinconce vis-à-vis des ailettes de refroidissement 44 qui les précèdent par rapport au flux d'air 12. C'est-à-dire que pour deux ailettes de refroidissement 44a et 44c d'une rangée d'ailettes 54 s'étendant suivant des abscisses 541a identiques suivant la direction D1 et possédant chacune une ordonnée distincte suivant un axe A1 perpendiculaire à la direction D2 du plan P1, respectivement 641a et 641c, il existe une ailette de refroidissement 44b d'une rangée d'ailettes 55 caractérisée par une abscisse 541b et par une ordonnée 641b suivant l'axe A1 du plan P1 qui est comprise entre les ordonnées 641a et 641c des ailettes de refroidissement 44a et 44c de la rangée d'ailettes 54.

Cette disposition en quinconce permet de dévier le flux d'air 12 pour chaque rangée d'ailettes 54, 55 que le flux d'air 12 rencontre. De cette manière, des turbulences d'extrémité 124 sont formées, augmentant les échanges thermiques entre les ailettes de refroidissement 44 et le flux d'air 12.

De plus, sur la figure 3c, les ailettes de refroidissement 44a et 44c comportent des enceintes d'accueil 442a, 442b pour l'ailette de refroidissement 44a et des enceintes d'accueil 442g, 442h pour l'ailette de refroidissement 44c. Chaque paire d'enceintes d'accueil (442a, 442g) et (442b, 442h) est définie par une abscisse 551a pour la paire d'enceintes d'accueil (442a, 442g) et par une abscisse 551b pour la paire d'enceintes d'accueil (442b, 442h). Ainsi, pour des ailettes de refroidissement 44a et 44c s'étendant selon une même abscisse 541a suivant la direction D1 et selon des ordonnées 641a et 641c différentes suivant l'axe A1, les caloducs 9 insérés dans les enceintes d'accueil 442a et 442g ont une même abscisse 551a suivant la direction D1. De la même manière, les caloducs 9 insérés dans les enceintes d'accueil 442b et 442h ont une même abscisse 551b suivant la direction D1.

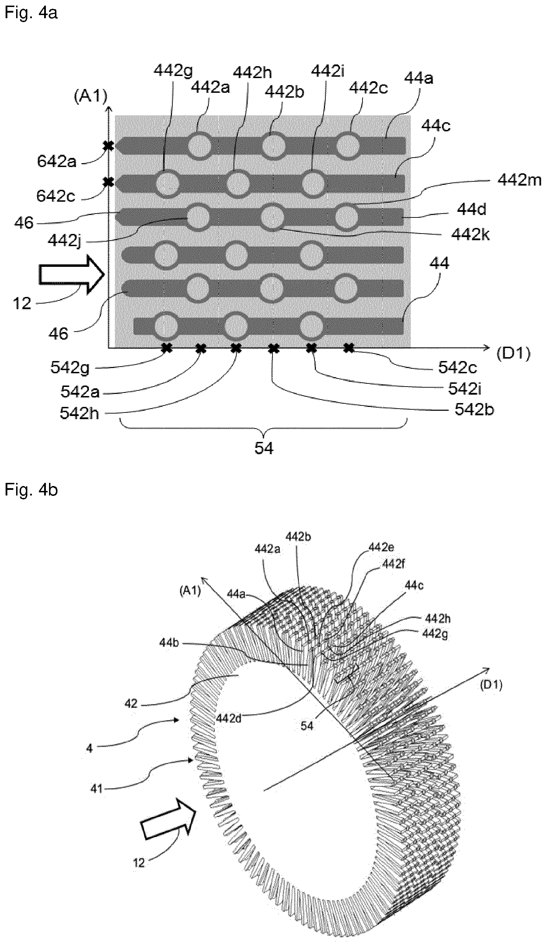

Les figures 4a et 4b représentent un troisième mode de réalisation d'un dispositif de refroidissement 4, celui-ci étant conforme à l'invention.

Selon ce mode de réalisation, les enceintes d'accueil 442 d'une ailette de refroidissement 44 sont placées en quinconce des enceintes d'accueil 442 des ailettes de refroidissement 44 adjacentes d'une même rangée d'ailettes 54.

Nous pouvons comprendre par en quinconce que pour l'ailette de refroidissement 44a de la rangée d'ailettes 54, les enceintes d'accueil 442a, 442b et 442c, qui sont caractérisées par une abscisse 542a, 542b, 542c selon la direction D1 et par une ordonnée 642a selon l'axe A1 du plan P1 traversant l'ailette de refroidissement 44a perpendiculairement à la direction D1, possèdent des coordonnées différentes en abscisse selon la direction D1 et en ordonnée selon l'axe A1 d'enceintes d'accueil 442g, 442h, 442i d'une ailette de refroidissement 44c adjacente à l'ailette de refroidissement 44a dans la rangée d'ailette 54.

De la même manière, les enceintes d'accueil 442g, 442h, 442i de l'ailette de refroidissement 44c, qui sont caractérisées par des abscisses 542g, 542h, 542i selon la direction D1 et par des ordonnées 642c selon l'axe A1, possèdent des coordonnées différentes en abscisse selon la direction D1 et en ordonnée selon l'axe A1 d'enceintes d'accueil 442j, 442k, 442m d'une ailette de refroidissement 44d adjacente à l'ailette de refroidissement 44c dans la rangée d'ailette 54.

Cette disposition des enceintes d'accueils 442a, 442b, 442c, 442g, 442h, 442i des ailettes de refroidissement 44a, 44c en quinconce permet de réguler le flux d'air 12 longeant les ailettes de refroidissement 44a, 44c en homogénéisant la vitesse du flux d'air 12 lors de la phase d'échange thermique entre les ailettes de refroidissement 44 et le flux d'air 12.

En outre, dans tous les modes de réalisation, les ailettes de refroidissement 44 peuvent être pourvues de sections réduites 46. Ces sections réduites 46 peuvent prendre la forme de cône, de parabole d'excentricité quelconque ou de toute autre forme favorisant l'engouffrement du flux d'air 12 le long des ailettes de refroidissement 44.

## Revendications

1. Dispositif de refroidissement (4) présentant une surface (424) configurée pour permettre la circulation d'un fluide caloporteur (12) le long de la surface (424) selon une première direction (D1), un échange de chaleur pouvant s'opérer par convection entre le dispositif de refroidissement (4) et le fluide (12), le dispositif (4) comprenant :
- n ailettes de refroidissement (44), n étant un entier supérieur ou égal à deux, chaque ailette de refroidissement (44) formant une excroissance du dispositif (4), s'étendant principalement dans un plan (P) contenant la première direction (D1),
- dans chaque ailette (44), au moins deux inserts (9) possédant une forme de tube et une dimension caractéristique d'une section du tube (D) et s'étendant principalement selon une seconde direction (D2) du plan (P) distincte de la première direction (D1), les inserts (9) ayant, sur leur plus grande longueur (L2), une résistance thermique plus faible que la résistance thermique de l'ailette de refroidissement (44) selon la même longueur, le dispositif étant **caractérisé en ce que**
chaque insert (9) étant distant selon la première direction (D1) d'un autre insert (9) suivant une longueur égale ou supérieure à la dimension caractéristique de la section du tube (D) de l'insert (9), **en ce que**
la dimension caractéristique de la section du tube (D) de l'insert (9) est supérieure à une épaisseur (E) de l'ailette de refroidissement (44) correspondante définie hors d'une section (P1) de l'ailette de refroidissement (44) perpendiculaire à la première direction (D1) et traversant l'insert (9), et **en ce que**
les inserts sont disposés en quinconce entre deux ailettes adjacentes.

2. Dispositif de refroidissement (4) selon la revendication 1, dans lequel la forme de tube des inserts (9) s'étend selon une troisième direction (D3) du tube et dans lequel les inserts (9) sont noyés dans l'ailette de refroidissement (44) correspondante sur une plus grande part de leur longueur selon la troisième direction (D3) du tube.

3. Dispositif de refroidissement (4) selon l'une des revendications 1 ou 2, dans lequel les inserts (9) sont des caloducs.

4. Dispositif de refroidissement (4) selon la revendication 4, n étant un entier supérieur ou égal à deux, dans lequel les n ailettes de refroidissement (44) comprenant au moins un insert (9) chacune, les n ailettes de refroidissement (44) s'étendent selon des mêmes abscisses suivant la première direction (D1) et une ordonnée différente suivant un axe (A1) de la section (P1), les inserts (9) ayant une abscisse décalée d'une longueur supérieure ou égale à la dimension caractéristique de la section (D) des inserts (9) selon la première direction (D1).

5. Dispositif de refroidissement (4) selon l'une des revendications précédentes, dans lequel l'insert (9) est noyé dans l'ailette de refroidissement (44) l'accueillant.

6. Dispositif de refroidissement (4) selon l'une des revendications 1 à 5, dans lequel la plus grande longueur (L2) de l'insert (9) est égale ou supérieure à une plus grande longueur (L) de l'ailette de refroidissement (44) dans une section (P1) de l'ailette de refroidissement (44) perpendiculaire à la première direction (D1).

7. Dispositif de refroidissement (4) selon l'une des revendications précédentes, dans lequel l'ailette de refroidissement (44) est pourvue d'une section réduite (46) en extrémité.

8. Dispositif de refroidissement (4) selon l'une des revendications précédentes, n étant un entier supérieur ou égal à deux, dans lequel plusieurs des n ailettes de refroidissement (44) sont alignées suivant la première direction (D1).

9. Dispositif de refroidissement (4) selon l'une des revendications précédentes, n étant un entier supérieur ou égal à trois, comprenant :
- une première ailette de refroidissement (44a) s'étendant selon une abscisse (551a) suivant la première direction (D1) et une ordonnée (641a) suivant un axe (A1) de la section (P1),
- une deuxième ailette de refroidissement (44c) s'étendant selon l'abscisse (551a) suivant la première direction (D1) et une ordonnée (641c) différente de la première ailette de refroidissement (44a) suivant l'axe (A1) de la section (P1),
- une des n ailettes de refroidissement (44b) comprenant au moins un insert (9) disposé dans l'ailette de refroidissement (44b) et s'étendant selon la deuxième direction (D2), l'ailette de refroidissement (44b) ayant une ordonnée (641b) comprise entre les ordonnées (641a ; 641c) de la première et de la deuxième ailette de refroidissement (44a - 44c) suivant l'axe (A1) de la section (P1).

10. Dispositif de refroidissement (4) selon l'une des revendications précédentes, dans lequel une graisse thermique (14) est appliquée entre l'insert (9) et l'ailette de refroidissement (44) correspondante.

11. Machine électrique (2) comprenant une carcasse sur laquelle s'appuient des enroulements et équipée du dispositif de refroidissement (4) selon l'une des revendications précédentes.

## Patentansprüche

1. Kühlvorrichtung (4), die eine Oberfläche (424) aufweist, die dazu konfiguriert ist, die Zirkulation eines Wärmeträgerfluids (12) entlang der Oberfläche (424) in einer ersten Richtung (D1) zuzulassen, wobei ein Wärmeaustausch durch Konvektion zwischen der Kühlvorrichtung (4) und dem Fluid (12) erfolgen kann, wobei die Vorrichtung (4) Folgendes umfasst:
- n Kühlrippen (44), wobei n eine ganze Zahl ist, die größer als oder gleich zwei ist, wobei jede Kühlrippe (44) einen Vorsprung der Vorrichtung (4) bildet, der sich vor allem in einer Ebene (P) erstreckt, die die erste Richtung (D1) enthält,
- in jeder Rippe (44) mindestens zwei Einsätze (9), die eine Rohrform und eine Abmessung, die für einen Abschnitt des Rohrs (D) charakteristisch ist, aufweisen und sich vor allem in einer zweiten Richtung (D2) der Ebene (P), die sich von der ersten Richtung (D1) unterscheidet, erstrecken, wobei die Einsätze (9) über ihre größere Länge (L2) einen Wärmewiderstand aufweisen, der niedriger als der Wärmewiderstand der Kühlrippe (44) in derselben Länge ist, wobei die Vorrichtung **dadurch gekennzeichnet ist, dass**
jeder Einsatz (9) in der ersten Richtung (D1) von einem anderen Einsatz (9) um eine Länge, die gleich oder größer als die Abmessung ist, die für den Abschnitt des Rohrs (D) des Einsatzes (9) charakteristisch ist, beabstandet ist, dass
die Abmessung, die für den Abschnitt des Rohrs (D) des Einsatzes (9) charakteristisch ist, größer als eine Dicke (E) der entsprechenden Kühlrippe (44) ist, die außerhalb eines Abschnitts (P1) der Kühlrippe (44) definiert ist, der senkrecht zu der ersten Richtung (D1) ist und den Einsatz (9) durchläuft, und dass
die Einsätze versetzt zwischen zwei benachbarten Rippen angeordnet sind.

2. Kühlvorrichtung (4) nach Anspruch 1, wobei die Rohrform der Einsätze (9) sich in einer dritten Richtung (D3) des Rohrs erstreckt und wobei die Einsätze (9) in die entsprechende Kühlrippe (44) über einen größeren Teil ihrer Länge in der dritten Richtung (D3) des Rohrs versenkt sind.

3. Kühlvorrichtung (4) nach einem der Ansprüche 1 oder 2, wobei die Einsätze (9) Wärmerohre sind.

4. Kühlvorrichtung (4) nach Anspruch 4, wobei n eine ganze Zahl ist, die größer als oder gleich zwei ist, wobei die n Kühlrippen (44) jeweils mindestens einen Einsatz (9) umfassen, wobei die n Kühlrippen (44) sich entlang selben Abszissen in der ersten Richtung (D1) und einer unterschiedlichen Ordinate gemäß einer Achse (A1) des Abschnitts (P1) erstrecken, wobei die Einsätze (9) eine Abszisse aufweisen, die um eine Länge, die größer als oder gleich der Abmessung ist, die für den Abschnitt (D) der Einsätze (9) charakteristisch ist, in der ersten Richtung (D1) versetzt ist.

5. Kühlvorrichtung (4) nach einem der vorhergehenden Ansprüche, wobei der Einsatz (9) in der Kühlrippe (44), in der er aufgenommen ist, versenkt ist.

6. Kühlvorrichtung (4) nach einem der Ansprüche 1 bis 5, wobei die größere Länge (L2) des Einsatzes (9) gleich oder größer als eine größere Länge (L) der Kühlrippe (44) in einem Abschnitt (P1) der Kühlrippe (44) ist, der senkrecht zu der ersten Richtung (D1) ist.

7. Kühlvorrichtung (4) nach einem der vorhergehenden Ansprüche, wobei die Kühlrippe (44) an einem Ende mit einem verringerten Abschnitt (46) versehen ist.

8. Kühlvorrichtung (4) nach einem der vorhergehenden Ansprüche, wobei n eine ganze Zahl ist, die größer als oder gleich zwei ist, wobei mehrere der n Kühlrippen (44) in der ersten Richtung (D1) ausgerichtet sind.

9. Kühlvorrichtung (4) nach einem der vorhergehenden Ansprüche, wobei n eine ganze Zahl ist, die größer als oder gleich drei ist, Folgendes umfassend:
- eine erste Kühlrippe (44a), die sich entlang einer Abszisse (551a) in der ersten Richtung (D1) und einer Ordinate (641a) gemäß einer Achse (A1) des Abschnitts (P1) erstreckt,
- eine zweite Kühlrippe (44c), die sich entlang der Abszisse (551a) in der ersten Richtung (D1) und einer Ordinate (641c), die sich von der ersten Kühlrippe (44a) unterscheidet, gemäß der Achse (A1) des Abschnitts (P1) erstreckt,
- wobei eine der n Kühlrippen (44b) mindestens einen Einsatz (9) umfasst, der in der Kühlrippe (44b) angeordnet ist und sich in der zweiten Richtung (D2) erstreckt, wobei die Kühlrippe (44b) eine Ordinate (641b) aufweist, die zwischen den Ordinaten (641a; 641c) der ersten und der zweiten Kühlrippe (44a; 44c) gemäß der Achse (A1) des Abschnitts (P1) umfasst ist.

10. Kühlvorrichtung (4) nach einem der vorhergehenden Ansprüche, wobei eine Wärmeleitpaste (14) zwischen dem Einsatz (9) und der entsprechenden Kühlrippe (44) aufgebracht wird.

11. Elektrische Maschine (2), umfassend ein Gehäuse, auf dem Wicklungen gestützt sind und das mit der Kühlvorrichtung (4) nach einem der vorhergehenden Ansprüche ausgestattet ist.

## Claims

1. A cooling device (4) having a surface (424) configured to allow the circulation of a heat-transfer fluid (12) along the surface (424) in a first direction (D1), an exchange of heat being able to take place by convection between the cooling device (4) and the fluid (12), the device (4) comprising:
- n cooling fins (44), n being an integer greater than or equal to two, each cooling fin (44) forming a protuberance of the device (4), extending primarily in a plane (P) containing the first direction (D1),
- in each fin (44), at least two inserts (9) having a tube form and a dimension characteristic of a section of the tube (D) and extending primarily in a second direction (D2) of the plane (P) distinct from the first direction (D1), the inserts (9) having, over their greater length (L2), a thermal resistance lower than the thermal resistance of the cooling fin (44) along the same length, the device being **characterised in that**
each insert (9) is distant in the first direction (D1) from another insert (9) by a length equal to or greater than the characteristic dimension of the section of the tube (D) of the insert (9), **in that**
the characteristic dimension of the section of the tube (D) of the insert (9) is greater than a thickness (E) of the corresponding cooling fin (44) defined outside of a section (P1) of the cooling fin (44) at right angles to the first direction (D1) and passing through the insert (9), and **in that**
the inserts are staggered between two adjacent fins.

2. The cooling device (4) according to claim 1, wherein the tube shape of the inserts (9) extends in a third tube direction (D3) and wherein the inserts (9) are embedded in the corresponding cooling fin (44) over a greater part of their length in the third tube direction (D3).

3. The cooling device (4) according to one of claims 1 or 2, wherein the inserts (9) are heat pipes.

4. The cooling device (4) according to claim 4, n being an integer greater than or equal to two, wherein, the n cooling fins (44) each comprising at least one insert (9), the n cooling fins (44) extending along same abscissae in the first direction (D1) and a different ordinate along an axis (A1) of the section (P1), the inserts (9) having an abscissa offset by a length greater than or equal to the characteristic dimension of the section (D) of the inserts (9) in the first direction (D1).

5. The cooling device (4) according to one of the preceding claims, wherein the insert (9) is embedded in the cooling fin (44) accommodating it.

6. The cooling device (4) according to one of claims 1 to 5, wherein the greater length (L2) of the insert (9) is equal to or greater than a greater length (L) of the cooling fin (44) in a section (P1) of the cooling fin (44) at right angles to the first direction (D1).

7. The cooling device (4) according to one of the preceding claims, wherein the cooling fin (44) is provided with a smaller section (46) at an end.

8. The cooling device (4) according to one of the preceding claims, n being an integer greater than or equal to two, wherein several of the n cooling fins (44) are aligned in the first direction (D1).

9. The cooling device (4) according to one of the preceding claims, n being an integer greater than or equal to three, comprising:
- a first cooling fin (44a) extending along an abscissa (551a) in the first direction (D1) and an ordinate (641a) on an axis (A1) of the section (P1),
- a second cooling fin (44c) extending along the abscissa (551a) in the first direction (D1) and an ordinate (641c) different from the first cooling fin (44a) on the axis (A1) of the section (P1),
- one of the n cooling fins (44b) comprising at least one insert (9) disposed in the cooling fin (44b) and extending in the second direction (D2), the cooling fin (44b) having an ordinate (641b) lying between the ordinates (641a; 641c) of the first and second cooling fins (44a; 44c) on the axis (A1) of the section (P1).

10. The cooling device (4) according to one of the preceding claims, wherein a thermal grease (14) is applied between the insert (9) and the corresponding cooling fin (44).

11. An electrical machine (2) comprising a field frame on which windings bear and which is equipped with the cooling device (4) according to one of the preceding claims.
